# EUROPÄISCHE PATENTSCHRIFT

(11) **EP 3 899 444 B1**
(45) Veröffentlichungstag und Bekanntmachung des Hinweises auf die Patenterteilung: **20.09.2023**
(21) Anmeldenummer: 19824248.9
(22) Anmeldetag: 10.12.2019
(51) Int. Cl.: G01F 1/66, G01F 1/86, G01N 9/00, G01N 11/00, G01N 29/00, G01N 9/24, G01N 29/024

(54) **ULTRASCHALL-MESSGERÄT**
ULTRASOUND INSTRUMENT
APPAREIL DE MESURE PAR ULTRASONS

(30) Priorität: 20.12.2018 DE 102018133066
(43) Veröffentlichungstag der Anmeldung: 27.10.2021
(73) Patentinhaber: Endress + Hauser Flowtec AG, 4153 Reinach (CH)
(72) Erfinder: BERBERIG, Oliver, 79639 Grenzach-Wyhlen (DE); RAUTENBERG, Jens, 59590 Geseke (DE); KISSLING, Beat, 4153 Reinach (CH); GRUNWALD, Sascha, 79585 Steinen (DE); BRAUN, Rudolf, 96450 Coburg (DE); STARK, Achim, 96487 Dörfles/Esbbach (DE); BERINGER, Klaus, 96253 Untersiemau (DE); RÜGER, Stefan, 07747 Jena (DE); HOFMANN, Theo Gerald, 96450 Coburg (DE)
(74) Vertreter: Penner, Paul
(86) Internationale Anmeldenummer: PCT/EP2019/084423
(87) Internationale Veröffentlichungsnummer: WO 2020/126671

(56) Entgegenhaltungen:
- EP-A2- 0 212 470
- WO-A2-2010/034713
- DE-A1-102019 110 514
- DE-A1-102019 112 332
- US-A1- 2011 132 102
- US-A1- 2016 153 816

## Beschreibung

Die Erfindung betrifft ein Ultraschall-Messgerät zum Erfassen einer Messgröße eines in einer Messkammer befindlichen Mediums.

Ultraschall-Messgeräte zum Erfassen von Messgrößen sind Stand der Technik. So zeigt beispielsweise die WO2008034878A2 ein Ultraschall-Messgerät, bei welchem Ultraschallwandler Lamb-Wellen in einer Messrohrwandung erzeugen, welche zu einer Abstrahlung von Ultraschallsignalen in ein mit einem Medium gefülltes Messrohr führen. Diese Ultraschallsignale können über eine oder mehrere Reflexionen an einer Messrohrinnenwand zu einem zum Empfang bestimmten Ultraschallwandler geleitet werden. Jedoch hat sich gezeigt, dass zusätzlich zu den Reflexionen von Ultraschallsignalen an der Messrohrwand im Bereich der Reflexionsorte zusätzliche Lamb-Wellen oder Reflexionen an einer Außenwand auftreten, welche auf störende Weise mit den Ultraschallsignalen interferieren, so dass der Empfang des Ultraschallsignals oder die Auswertung des Ultraschallsignals erschwert ist.

Die WO2010/034713A2 offenbart ein Verfahren sowie ein Messgerät zur Erfassung einer Medieneigenschaft umfassend einen akustischen Wellenleiter mit akustischen Sendern und Empfängern.

Aufgabe der Erfindung ist es, ein Ultraschall-Messgerät bereitzustellen, bei welchem eine Signalqualität verbessert ist.

Die Aufgabe wird gelöst durch ein Ultraschall-Messgerät gemäß dem unabhängigen Anspruch 1.

Ein erfindungsgemäßes Ultraschall-Messgerät zum Erfassen einer Messgröße eines in einer Messkammer befindlichen Mediums umfasst:
Die Messkammer mit einer Messkammerwandung und einer Messkammerlängsachse;
Mindestens ein Paar Ultraschallwandler, welches auf einer ersten Messkammerseite der Messkammer angeordnet ist, wobei die Ultraschallwandler eines Paars dazu eingerichtet sind, Ultraschallsignale entlang eines Ultraschallsignalpfads zwischen den Ultraschallwandlern des Paars durch das Volumen der Messkammer zu senden sowie Ultraschallsignale zu empfangen, wobei die Ultraschallsignale eine Zentralfrequenz aufweisen,
wobei ein Ultraschallsignalpfad durch das Volumen der Messkammer jeweils mindestens eine Ultraschallsignalreflexion an mindestens einer Reflexionsfläche umfasst, wobei eine Reflexionsfläche auf einer der ersten Messkammerseite gegenüberliegenden Messkammerinnenfläche der Messkammerwandung angeordnet ist,
wobei die Messkammerwandung im Bereich der ersten Messkammerseite gegenüberliegenden Reflexionsfläche dazu eingerichtet ist, eine Reflexion eines Ultraschallsignals an einer Messkammeraußenfläche der Messkammerwandung in Richtung des Ultraschallsignalpfads zu behindern,
wobei die Messkammerwandung im Bereich der Reflexionsfläche eine maximale Wandstärke aufweist, welche mindestens einen Faktor 1.5 und insbesondere mindestens einen Faktor 2, und bevorzugt mindestens einen Faktor 2.5 größer ist als eine zur Zentralfrequenz gehörenden Rayleigh-Wellenlänge des Ultraschallsignals in der Messkammerwandung,
wobei die Messkammeraußenfläche im Bereich der Reflexionsfläche mindestens eine Einkerbung parallel zur Messkammerlängsachse aufweist, wobei Einkerbungsflächen nichtparallel zur Reflexionsfläche sind,
wobei eine Gesamtheit der mindestens einen Einkerbung eine Breite aufweist, welche zumindest einer Breite der Reflexionsfläche multipliziert mit einem Faktor F1 entspricht, wobei F1 größer als 0,7 und insbesondere größer als 0.8 und bevorzugt größer als 0.9 ist.

Dadurch können in die Messrohrwandung eintretende Ultraschallwellen in eine andere Richtung als eine Richtung des Ultraschallsignalpfads abgelenkt werden.

Auf diese Weise kann ein störender Einfluss durch die Rayleigh-Wellen im Medium erzeugter Ultraschallsignale auf ein an der Reflexionsfläche reflektiertes Ultraschall-Signal vermindert werden.

In einer Ausgestaltung ist das mindestens eine Paar Ultraschallwandler an einer Außenseite der Messkammer angeordnet,
wobei die Ultraschallwandler eines Paars dazu eingerichtet sind, Ultraschallsignale mittels Lamb-Wellen oder Plattenwellen im Übergangsbereich zu Rayleighwellen in der Messkammerwandung zu senden und zu empfangen, wobei die Ultraschallwandler dazu eingerichtet sind, die Lamb-Wellen oder Plattenwellen in einem Koppelbereich der Messkammerwandung mittels jeweils mindestens einem Wandlerelement anzuregen und/oder zu erfassen.

In einer Ausgestaltung weist die Außenfläche mehrere Einkerbungen auf, wobei Einkerbungen insbesondere parallel zueinander verlaufen.

In einer Ausgestaltung verlaufen eine erste Gruppe Einkerbungen parallel zueinander, und eine zweite Gruppe Einkerbungen parallel zueinander, wobei Einkerbungen der ersten Gruppe nichtparallel zu Einkerbungen der zweiten Gruppe sind, wobei eine Ausrichtung der ersten Gruppe einen Winkel von mindestens 20 Grad zu einer Ausrichtung der zweiten Gruppe aufweist.

In einer Ausgestaltung weist die mindestens eine Einkerbung bezüglich der Zentralfrequenz zumindest abschnittsweise eine Tiefe von mindestens einer Wellenlänge eines Ultraschallsignals in der Messrohrwandung auf,
und/oder wobei ein Versatz zweier benachbarter Einkerbungen kleiner ist als eine Wellenlänge eines Ultraschallsignals in der Messrohrwandung.

In einer Ausgestaltung ist die Messkammerwandung oder eine Messkammeraußenfläche der Messkammerwandung zumindest abschnittsweise aus einem Ultraschallsignale absorbierenden Material gefertigt.

Dadurch kann eine Intensität von Ultraschallwellen, welche nach Reflektion an der Messkammeraußenfläche sich in Richtung der Messkammer fortbewegen vermindert werden.

In einer Ausgestaltung weist die Messkammerwandung eine Kammerstruktur auf, wobei die Kammerstruktur mittels Einsatz verschiedener Materialien hergestellt ist, wobei ein erstes Material durch die Messkammerwandung charakterisiert ist und beispielsweise ein Kunststoff oder ein Metall oder eine Keramik ist,
und wobei zumindest ein zweites Material ein Material aus folgender Liste ist:
Gas, insbesondere Luft, Kunststoff, Metall, Gel, Schaum, Aerogel, Vakuum, ein Komposit mit beispielsweise Glashohlkugeln, oder Schwermetall- bzw. Schwermetalloxidpulver.

In einer Ausgestaltung weist die Messkammerwandung im Bereich der Reflexionsfläche eine oberflächlich angeordnete oder in die Messkammerwandung eingebettete dissonante Struktur auf,
welche dazu eingerichtet ist, die Entstehung von Rayleigh-Wellen im Bereich der ersten Reflexionsfläche zu behindern.

In einer Ausgestaltung umfasst die dissonante Struktur in Richtung einer Messkammerlängsachse periodisch oder quasiperiodisch räumlich variierende akustische Impedanzen.

In einer Ausgestaltung sind die variierenden akustischen Impedanzen mittels Einsatz verschiedener Materialien hergestellt, wobei ein erstes Material durch die Messkammerwandung charakterisiert ist und beispielsweise ein Kunststoff oder ein Metall oder eine Keramik ist, und wobei zumindest ein zweites Material ein Material aus folgender Liste ist:
Gas, insbesondere Luft, Kunststoff, Metall, Gel, Schaum, Aerogel, Vakuum, ein Komposit mit beispielsweise Glashohlkugeln, oder Schwermetall- bzw. Schwermetalloxidpulver.

In einer Ausgestaltung ist das mindestens eine Wandlerelement ein Piezoelement, welches mit der Messkammer mechanisch verbunden ist,
oder wobei der Ultraschallwandler ein Koppelelement mit einer ersten, der Messkammer abgewandten Seite und einer zweiten, der Messkammer zugewandten Seite aufweist, wobei das mindestens eine Wandlerelement auf der ersten Seite des Koppelelements angeordnet ist, und wobei das Koppelelement mittels der zweiten Seite mit der Messkammer mechanisch verbunden ist,
oder wobei das Wandlerelement eine Spulenvorrichtung umfasst, wobei die Messkammer in den Koppelbereichen ein magnetostriktives Material umfasst oder trägt, wobei die Spulenvorrichtung dazu eingerichtet ist, eine Auslenkung der Messkammerwandung mittels des magnetostriktiven Materials zu erzeugen und/oder zu erfassen.

In einer Ausgestaltung ist das Piezoelement bzw. das Koppelelement bzw. das magnetostriktive Material mit der Messammer mittels einer Klebe- Löt-, Schweißverbindung oder über eine lösbare Verbindung verbunden.

In einer Ausgestaltung ist die Messkammer in ein das Medium beinhaltendes Behältnis über eine Öffnung des Behältnisses mediendicht einsteckbar ist,
oder die Messkammer ist ein Messrohr.

In einer Ausgestaltung ist das Ultraschall-Messgerät dazu eingerichtet, mindestens eine der folgenden Medieneigenschaften zu messen:
Volumendurchfluss, Massedurchfluss, Dichte, Viskosität, akustische Dämpfung, Schallgeschwindigkeit, Konzentration mindestens eines Medienbestandteils, akustische Dispersion, sowie daraus abgeleiteter Messgrößen.

Im Folgenden wird die Erfindung anhand von Ausführungsbeispielen beschrieben.
Fig. 1 zeigt ein beispielhaftes erfindungsgemäßes Ultraschall-Messgerät mit einem Messrohr;
Fig. 2 zeigt ein beispielhaftes erfindungsgemäßes Ultraschall-Messgerät mit einem Messrohr;
Fig. 3 a) bis c) zeigen erfindungsgemäße Querschnitte durch beispielhafte erfindungsgemäße Messkammern;
Fig. 4 a) skizziert eine beispielhafte erfindungsgemäße Außenkontur einer Messkammer im Bereich der Reflexionsfläche;
Fig. 5 zeigt ein beispielhaftes erfindungsgemäßes Ultraschall-Messgerät mit einer in ein Behältnis einsteckbaren Messkammer;
Fig. 6 a) bis c) zeigen verschiedene Ultraschallwandler;
Fig. 7 a) bis c) zeigen verschiedene Ultraschallwandleranordnungen.

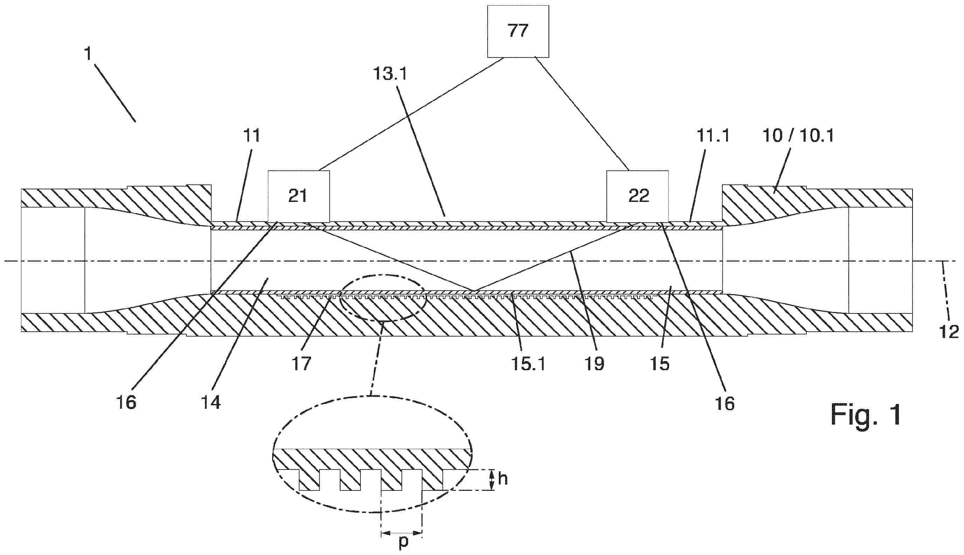

Fig. 1 zeigt einen Längsschnitt durch eine Messkammer 10 eines erfindungsgemäßen Ultraschall-Messgeräts 1 mit einer als Messrohr 10.1 ausgestalteten Messkammer 10, mit einem Paar Ultraschallwandler 21, 22, welche an einer Messkammeraußenfläche 11.1 der Messkammerwandung 11 auf einer ersten Messkammerseite 13.1 angebracht sind, und einer elektronischen Mess-/Betriebsschaltung 77, welche dazu eingerichtet ist, die Ultraschallwandler zu betreiben und mittels der Ultraschallwandler erzeugte Messsignale auszuwerten und Messwerte von Messgrößen bereitzustellen. Die Messkammer ist dazu eingerichtet, ein Medium zu beinhalten oder zu führen.

Die Ultraschallwandler sind dazu eingerichtet, Ultraschallsignale entlang eines Ultraschallsignalpfads 19 zwischen den Ultraschallwandlern des Paars durch das Volumen der Messkammer 14 zu senden sowie Ultraschallsignale zu empfangen, wobei die Ultraschallsignale eine Zentralfrequenz aufweisen, wobei der Ultraschallsignalpfad mindestens eine Reflexion an einer Reflexionsfläche 15.1 aufweist, welche auf einer der ersten Messkammerseite gegenüberliegenden Seite der Messkammer angeordnet ist.

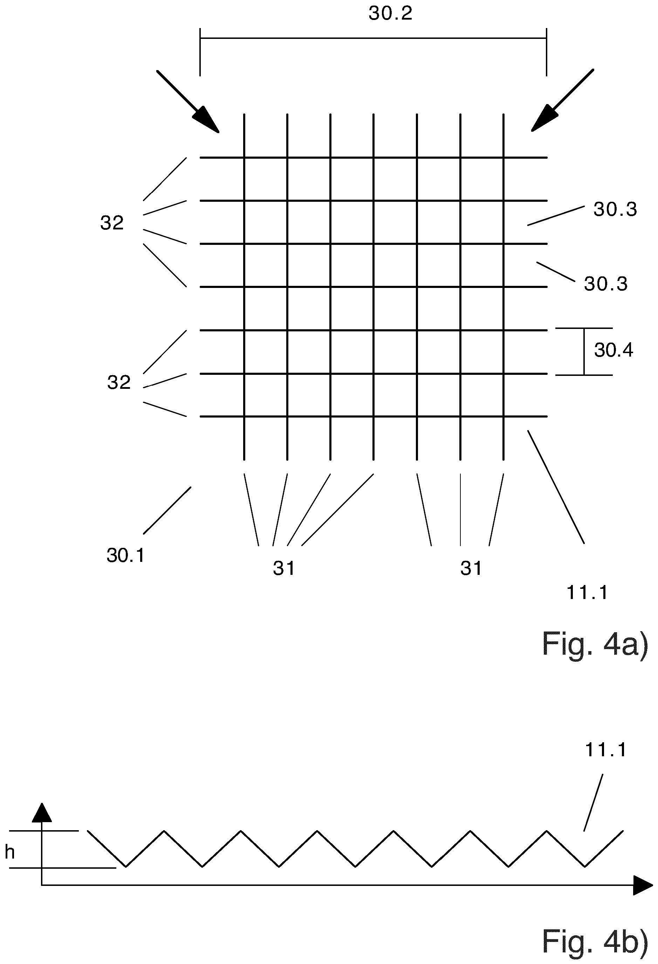

Die Ultraschallwandler 21, 22 eines Paars sind dazu eingerichtet, Ultraschallsignale beispielsweise mittels Lamb-Wellen oder Plattenwellen im Übergangsbereich zu Rayleigh-Wellen in der Messkammerwandung zu senden und zu empfangen, wobei die Ultraschallwandler dazu eingerichtet sind, die Lamb-Wellen oder Plattenwellen in einem Koppelbereich 16 der Messkammerwandung mittels jeweils mindestens einem Wandlerelement 23, siehe Fig. 4, anzuregen und/oder zu erfassen. Alternativ können die Ultraschallwandler auch in die Messkammerwandung integriert sein und mit dem Medium in Kontakt stehen.

Reflektionen von Ultraschallsignalen an einer Grenzfläche führen üblicherweise zu einer teilweisen Einkopplung von Ultraschall ausgehend von einem ersten Medium in ein zweites Medium, so dass ein Anteil des Ultraschallsignals vom Medium innerhalb der Messkammer in die Messkammerwandung eintritt. Falls die Messkammer im Bereich der Reflexionsfläche eine Wandstärke aufweist, welche größer ist als eine zum Ultraschallsignalanteil in der Messkammerwandung gehörige Rayleigh-Wellenlänge, dann kann die Einkopplung des Ultraschallsignalanteils in die Messkammerwandung eine Ausbildung von Rayleigh-Wellen oder Plattenwellen im Übergangsbereich zwischen Lamb-Wellen und Rayleigh-Wellen in der Messkammerwandung 11 im Bereich der Reflexionsfläche 15.1 führen. Diese ausgebildeten Rayleigh-Wellen bzw. Plattenwellen koppeln ihrerseits Ultraschall in das Messrohr ein, welcher Ultraschall mit den entlang des Ultraschallsignalpfads 19 sich fortbewegenden Ultraschall-Signalen zeitlich und/oder räumlich interferiert. Dies kann eine Signalauswertung der entlang des Ultraschallsignalpfads 19 sich fortbewegenden Ultraschall-Signalen erschweren. Darüber hinaus führt eine Einkopplung von Ultraschall in die Messkammerwandung zu einem Energieverlust des Ultraschall-Signals im Messkammervolumen.

Eine Einkopplung des Ultraschallsignalanteils in die Messkammerwandung führt außerdem zu einer Reflektion von Ultraschall an einer Außenseite der Messkammerwandung, so dass der reflektierte Ultraschall in das Volumen der Messkammer eindringen kann.

Erfindungsgemäß ist die Messkammer im Bereich der Reflexionsfläche dazu eingerichtet, das Anregen von Rayleigh-Wellen zu behindern. Dies kann wie in Fig. 1 gezeigt mittels einer dissonanten Struktur 17 bewerkstelligt sein. Die dissonante Struktur befindet sich auf einer Außenseite des Messrohrs, kann aber auch in die Messkammerwandung integriert sein. Die dissonante Struktur weist in Richtung einer Messkammerlängsachse 12 eine periodische oder quasiperiodische Abfolge von räumlich variierenden akustische Impedanzen auf, wobei die variierenden akustischen Impedanzen mittels Einsatz verschiedener Materialien hergestellt sind, wobei ein erstes Material durch die Messkammerwandung 11 charakterisiert ist und beispielsweise ein Kunststoff oder ein Metall oder eine Keramik ist, und wobei zumindest ein zweites Material ein Material aus folgender Liste ist: Gas, insbesondere Luft, Kunststoff, Metall, Gel, Schaum, Aerogel, Vakuum, ein Komposit mit beispielsweise Glashohlkugeln, oder Schwermetall- bzw. Schwermetalloxidpulver. Eine räumliche Periodizität p der räumlich variierenden akustischen Impedanzen ist dergestalt an die verwendeten Ultraschallsignale angepasst, dass an Kanten der dissonanten Struktur reflektierte Ultraschallwellen destruktiv interferieren und somit eine Wiedereinkopplung von Ultraschall in die Messkammer erschwert ist. Die dissonante Struktur kann auf der Messrohraußenseite zusätzlich vergossen oder verkapselt sein.

Eine Einkopplung des Ultraschallsignalanteils in die Messkammerwandung führt außerdem zu einer Reflektion von Ultraschall an einer Außenseite der Messkammerwandung, so dass der reflektierte Ultraschall wieder in das Volumen der Messkammer eindringen und dort mit den entlang des Ultraschallsignalpfads 19 sich fortbewegenden Ultraschall-Signalen zeitlich und/oder räumlich interferieren kann.

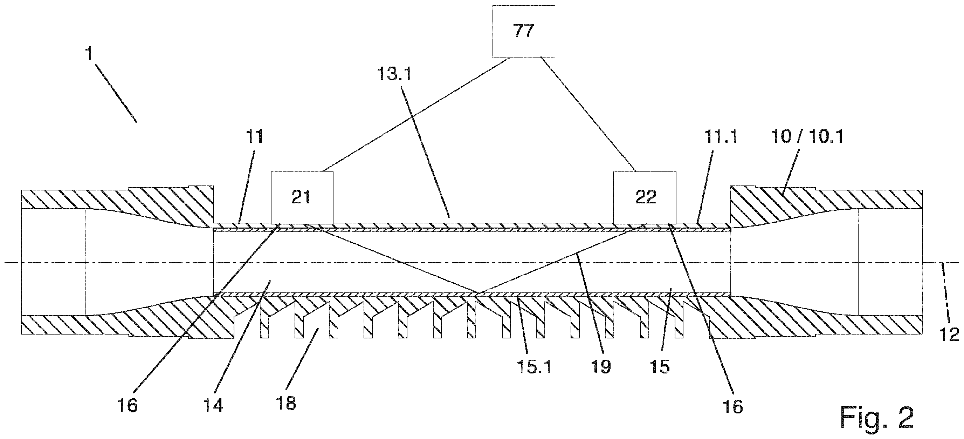

Fig. 2 zeigt einen Längsschnitt durch eine Messkammer eines erfindungsgemäßen Ultraschall-Messgeräts 1, wobei die als Messrohr 10.1 ausgestaltete Messkammer im Bereich der Reflexionsfläche 15.1 auf der Außenseite der Messkammerwandung eine Kammerstruktur 18 aufweist, wobei die Kammerstruktur mittels Einsatz verschiedener Materialien hergestellt ist, wobei ein erstes Material durch die Messkammerwandung charakterisiert ist und beispielsweise ein Kunststoff oder ein Metall oder eine Keramik ist, und wobei zumindest ein zweites Material ein Material aus folgender Liste ist: Gas, insbesondere Luft, Kunststoff, Metall, Gel, Schaum, Aerogel, Vakuum, ein Komposit mit beispielsweise Glashohlkugeln, oder Schwermetall- bzw. Schwermetalloxidpulver. Das zweite Material ist dazu eingerichtet, Ultraschall in der Messkammerwandung zu absorbieren, so dass keine Wiedereinkopplung in das Volumen der Messkammer bzw. Messrohr möglich ist. Anstatt einer Kammerstruktur kann auch durchgehend ein absorbierendes Material auf der Außenseite aufgetragen sein. Alternativ kann die Kammerstruktur zur Außenseite hin auch abgeschlossen sein.

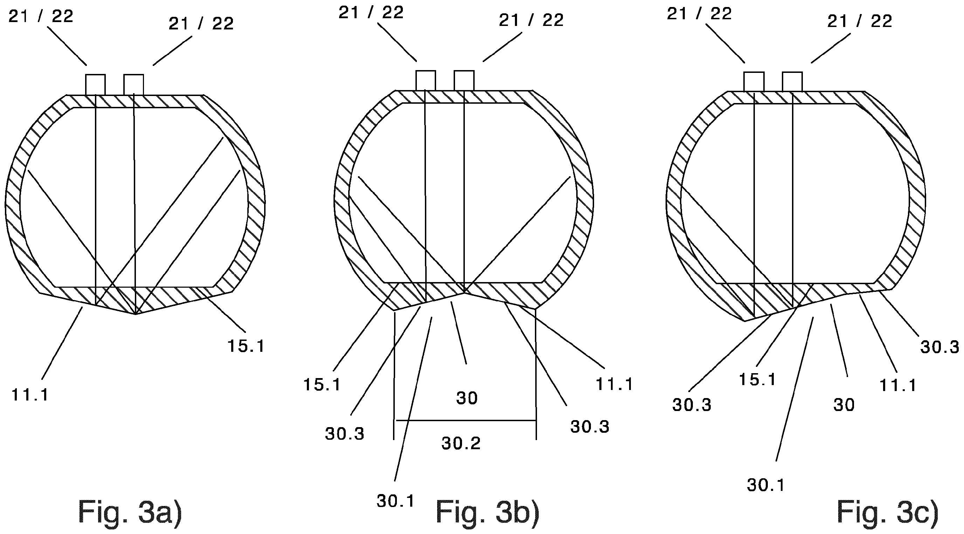

Figs. 3 a) bis c) skizzieren beispielhafte erfindungsgemäße Messkammerquerschnitte, welche alternativ oder zusätzlich zur in Fig. 1 gezeigten dissonanten Struktur eingerichtet werden können. Dabei weist die Messkammeraußenfläche 11.1 im Bereich der Reflexionen mindestens eine Einkerbung 30 parallel zur Messkammerlängsachse mit Einkerbungsflächen 30.3 auf, welche Einkerbungen in die Messkammerwandung eintretenden Ultraschall seitlich wegreflektieren. Auf diese Weise kann eine störende Wechselwirkung mit Ultraschallsignalen, welche sich entlang eines Ultraschallsignalpfads fortbewegen, zumindest abgeschwächt werden. Die Gesamtheit 30.1 der mindestens einenEinkerbung weist in einem Messkammerquerschnitt eine Breite 30.2 auf, welche zumindest einer Breite der Reflexionsfläche multipliziert mit einem Faktor F1 entspricht, wobei F1 größer als 0,7 und insbesondere größer als 0.8 und bevorzugt größer als 0.9 ist. Dadurch kann eine Reflexion von Ultraschall in Richtung eines Ultraschallwandlers 21, 22 verhindert werden.

Fig. 4 a) und b) skizzieren eine weitere beispielhafte erfindungsgemäße Möglichkeit, die Messkammeraußenfläche im Bereich der Reflexionsfläche zumindest abschnittsweise mittels Einkerbungen zu strukturieren, wobei eine erste Gruppe Einkerbungen 31 parallel zueinander verlaufen, und wobei eine zweite Gruppe Einkerbungen 32 parallel zueinander verlaufen, wobei Einkerbungen der ersten Gruppe nichtparallel zu Einkerbungen der zweiten Gruppe sind, wobei eine Ausrichtung der ersten Gruppe einen Winkel von mindestens 20 Grad zu einer Ausrichtung der zweiten Gruppe aufweist. Der Versatz 30.4 zwischen benachbarten Einkerbungen der ersten Gruppe bzw. der zweiten Gruppe ist dabei kleiner als eine transversale Wellenlänge, und insbesondere kleiner als eine halbe transversale Wellenlänge des zu verwendenden Ultraschalls in der Messkammerwandung. Bevorzugt ist eine Höhe h der Einkerbung, siehe Fig. 4 b) zumindest eine halbe transversale Wellenlänge des zu verwendenden Ultraschalls in der Messkammerwandung. Die Einkerbungen können mit einem Material gefüllt sein, welches beispielsweise akustisch dämpfend wirkt. Das in Fig. 4 b) gezeigte Höhenprofil verläuft beispielsweise in Richtung der Pfeile. Die Gesamtheit 30.1 der mindestens Einkerbungen weist in einem Messkammerquerschnitt eine Breite 30.2 auf, welche zumindest einer Breite der Reflexionsfläche multipliziert mit einem Faktor F1 entspricht, wobei F1 größer als 0,7 und insbesondere größer als 0.8 und bevorzugt größer als 0.9 ist. Dadurch kann eine Reflexion von Ultraschall in Richtung eines Ultraschallwandlers 21, 22 verhindert werden.

Ultraschall, welcher auf die Einkerbungen gemäß Figs. 4 a) und b) auftrifft, erfährt einen kontinuierlich sich ändernden akustischen Index, so dass an den Einkerbungen reflektierter Ultraschall zeitlich ausgeschmiert wird und zu tieferen Frequenzen verschoben wird. Dadurch kann der Ultraschall entlang des Ultraschall-Signalpfads sich fortbewegende Ultraschallsignale nicht mehr störend beeinflussen.

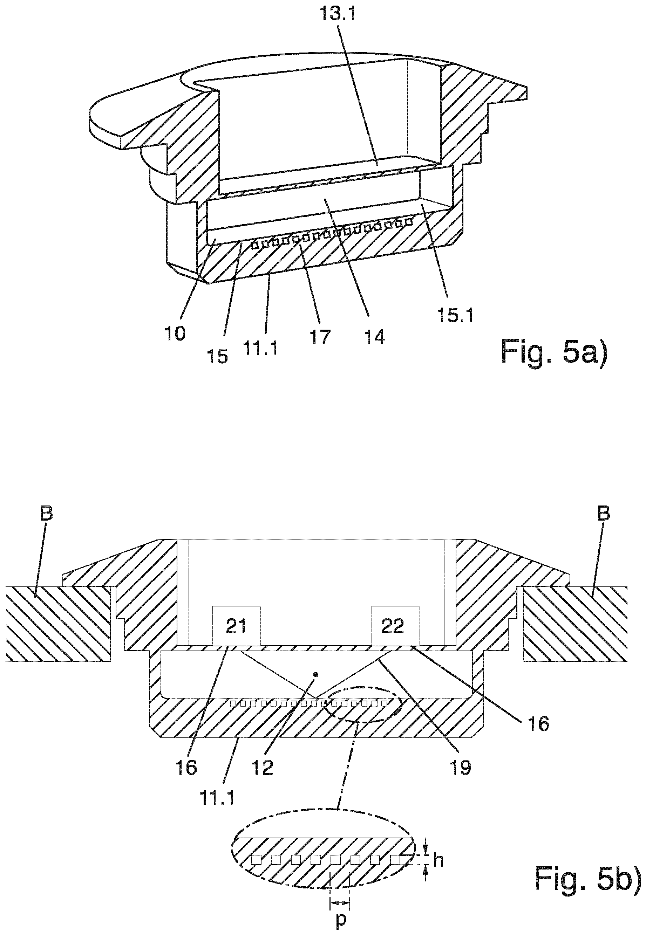

Figs. 5 a) und 5 b) zeigen Schnitte durch eine Messkammer eines erfindungsgemäßen Ultraschall-Messgeräts 1, wobei die Messkammer im Gegensatz zu den Figuren 1 und 2 nicht als Messrohr ausgestaltet ist, sondern als ein in ein Behältnis B einsetzbarer Messeinsatz. Die Messkammer umgreift äquivalent zu den in Figs. 1 und 2 gezeigten Ausgestaltungen ein Messkammervolumen und kann wie hier gezeigt zwei offene Seiten aufweisen, über welche das Medium in die Messkammer eintreten bzw. austreten kann. Alternativ ist auch eine Messkammer mit beispielsweise nur einer offenen Seite denkbar. Erfindungsgemäß ist die Messkammer im Bereich der Reflexionsfläche mittels einer dissonanten Struktur 17 dazu eingerichtet, das Anregen von Rayleigh-Wellen und/oder Plattenwellen im Übergangsbereich zu Rayleigh-Wellen zu behindern. Das bezüglich Figs. 1 bis 4 offenbarte gilt genauso für Fig. 5. Insbesondere kann die Messkammeraußenwandung 11.1 im Bereich der Reflexionsfläche alternativ oder zusätzlich zur dissonanten Struktur 17 Einkerbungen gemäß der Figuren 3 a) bis c) und 4 a) und b) und/oder einen Verguss aufweisen.

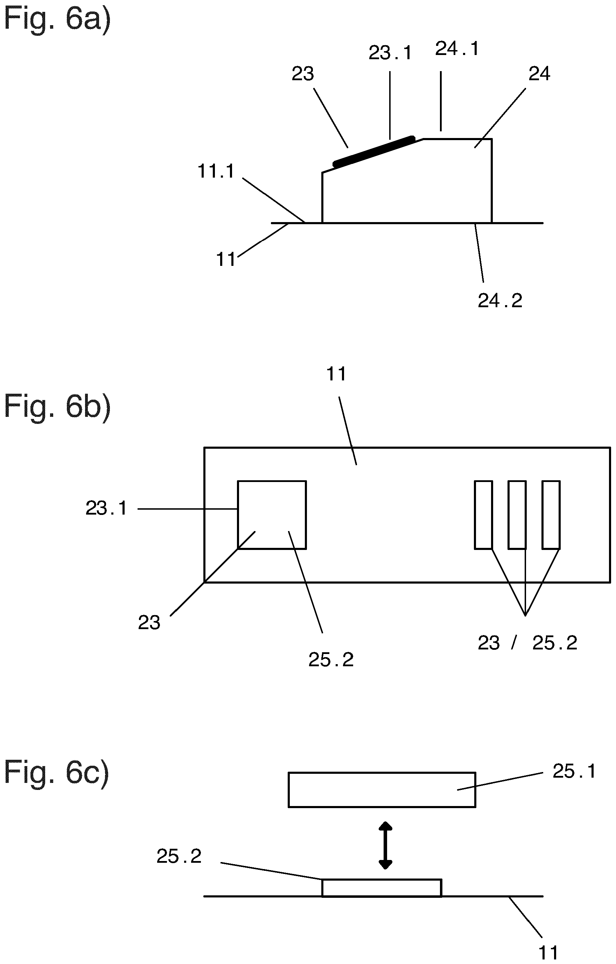

Figs. 6 a), 6 b) und 6 c) zeigen verschiedene, für ein erfindungsgemäßes Ultraschall-Messgerät verwendbare Ultraschallwandler, wobei die gezeigten Ultraschallwandler nicht erschöpfend sind.

Fig. 6 a) zeigt eine Seitenansicht auf einen Ultraschallwandler umfassend ein Wandlerelement 23.1, insbesondere eine Piezoelement 23.1 und ein Koppelelement 24 mit einer ersten Seite 24.1 und einer der ersten Seite abgewandten zweiten Seite 24.2. Das Wandlerelement ist auf der ersten Seite des Koppelements angeordnet, wobei das Koppelelement mittels der zweiten Seite mit der Messkammerwandung akustisch und mechanisch gekoppelt ist.

Fig. 6 b) zeigt Ultraschallwandler, bei welchen ein Wandlerelement 23, insbesondere ein Piezoelement oder ein magnetostriktives Material 25.2 auf der Messkammerwandung aufgebracht ist. Alternativ kann die Messkammerwandung zumindest abschnittsweise piezoelektrisch oder magnetostriktiv ausgebildet sein.

Piezoelemente können durch Beaufschlagung mittels eines elektrischen Spannungspulses zu einer Änderung einer Ausdehnung gezwungen werden, bzw. durch eine mechanisch / akustisch induzierte Ausdehnungsänderung einen elektrischen Spannungspuls erzeugen. Dadurch eignen sich Piezoelemente für das Erzeugen und für das Erfassen von Utlraschallsignalen.

Das mindestens eine Piezoelement kann auch Bestandteil eines Interdigitaltransducers sein.

Fig. 6 c) zeigt eine Seitenansicht eines Ultraschallwandlers, welcher auf Magnetostriktion basiert. Eine Spulenvorrichtung 25.1 ist dazu eingerichtet, mittels elektrischer Felder das magnetostriktive Material gemäß Fig. 6 b) zu bewegen und/oder dessen Bewegungen zu erfassen. Dadurch eignen sich Ultraschallwandler, welche auf Magnetostriktion basieren für das Erzeugen und für das Erfassen von Ultraschallsignalen.

Das Koppelelement, die Piezolemente bzw. das magnetorestriktive Material kann lösbar mechanisch mit der Messkammerwandung beispielsweise durch Anpressen verbunden sein, oder fest verbunden beispielsweise durch Kleben, Löten oder Schweißen.

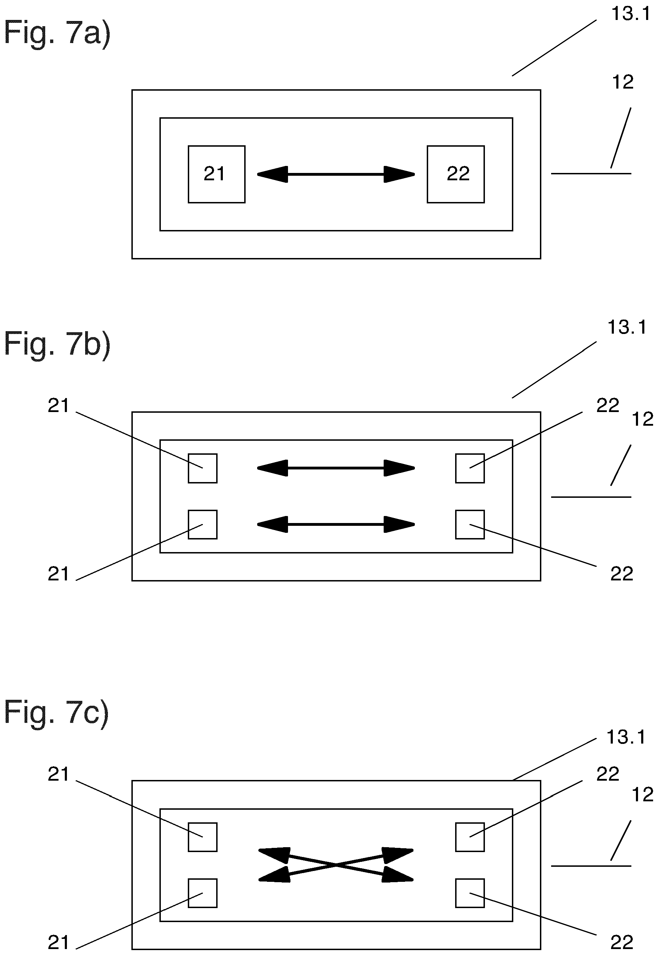

Fig. 7 a), b), c) zeigen verschiedene Aufsichten auf Anordnungsmöglichkeiten von Ultraschallwandlerpaaren umfassend Ultraschallwandler 21, 22 an einer ersten Messkammerseite 13.

Fig. 7 a) zeigt eine Anordnung eines Ultraschallwandlerpaars. Ultraschallsignale, welche zwischen den Ultraschallwandlern entlang des Ultraschallsignalpfads gesendet werden, können beispielsweise in einer Ebene verlaufen. Falls die erste Messkammerseite 13.1 im Bereich der Ultraschallwandler sowie die Reflexionsfläche eben sind, kann die Ebene parallel versetzt oder schräg zur Messkammerachse 12 verlaufen.

Fig. 7 b) zeigt eine Anordnung zweier Ultraschallwandlerpaare, welche Ultraschallsignale parallel zur Messrohrachse verlaufen. In diesem Fall ist es notwendig, dass die erste Messkammerseite 13.1 im Bereich der Ultraschallwandler sowie die Reflexionsfläche eben sind.

Fig. 7 c) zeigt eine Anordnung zweier Ultraschallwandlerpaare, welche Ultraschallsignale schräg zur Messrohrachse verlaufen. In diesem Fall ist es notwendig, dass die erste Messkammerseite 13.1 im Bereich der Ultraschallwandler eben ist. Die Reflexionsfläche kann eben oder gekrümmt sein.

### Bezugszeichenliste

- 1: Ultraschall-Messgerät
- 10: Messkammer
- 10.1: Messrohr
- 11: Messkammerwandung
- 11.1: Messkammeraußenfläche
- 12: Messkammerlängsache
- 13.1: erste Messkammerseite
- 14: Volumen der Messkammer
- 15: Messkammerinnenfläche
- 15.1: Reflexionsfläche
- 16: Koppelbereich
- 17: dissonante Struktur
- 18: Kammerstruktur
- 19: Ultraschall-Signalpfad
- 21,22: Ultraschallwandler
- 23: Wandlerelement
- 23.1: Piezoelement
- 24: Koppelelement
- 24.1: erste Seite des Koppelelements
- 24.2: zweite Seite des Koppelelements
- 25.1: Spulenvorrichtung
- 25.2: magnetostriktives Material
- 30: Einkerbung
- 30.1: Gesamtheit der Einkerbung
- 30.2: Breite der Gesamtheit
- 30.3: Flächen der Einkerbung
- 30.4: Versatz
- 31: erste Gruppe Einkerbungen
- 32: zweite Gruppe Einkerbungen
- 77: elektronische Mess-/Betriebsschaltung
- B: Behältnis
- h: Höhe
- p: Periodizität

## Patentansprüche

1. Ultraschall-Messgerät (1) zum Erfassen einer Messgröße eines in einer Messkammer befindlichen Mediums umfassend:
Die Messkammer (10) mit einer Messkammerwandung (11) und einer Messkammerlängsachse (12);
mindestens ein Paar Ultraschallwandler (21, 22), welches auf einer ersten Messkammerseite (13.1) der Messkammer angeordnet ist, wobei die Ultraschallwandler eines Paars dazu eingerichtet sind, Ultraschallsignale entlang eines Ultraschallsignalpfads zwischen den Ultraschallwandlern des Paars durch das Volumen der Messkammer (14) zu senden sowie Ultraschallsignale zu empfangen, wobei die Ultraschallsignale eine Zentralfrequenz aufweisen,
wobei ein Ultraschallsignalpfad (19) durch das Volumen der Messkammer jeweils mindestens eine Ultraschallsignalreflexion an mindestens einer Reflexionsfläche (15.1) umfasst, wobei eine Reflexionsfläche auf einer der ersten Messkammerseite (13.1) gegenüberliegenden Messkammerinnenfläche (15) der Messkammerwandung angeordnet ist;
eine elektronische Mess-/Betriebsschaltung (77), welche dazu eingerichtet ist, die Ultraschallwandler zu betreiben und mittels der Ultraschallwandler erzeugte Messsignale auszuwerten und Messwerte von Messgrößen bereitzustellen,
wobei
die Messkammerwandung im Bereich der ersten Messkammerseite gegenüberliegenden Reflexionsfläche dazu eingerichtet ist, eine Reflexion eines Ultraschallsignals an einer Messkammeraußenfläche (11.1) der Messkammerwandung (11) in Richtung des Ultraschallsignalpfads zumindest behindern,
wobei die Messkammerwandung im Bereich der Reflexionsfläche eine maximale Wandstärke aufweist, welche mindestens einen Faktor 1.5 und insbesondere mindestens einen Faktor 2, und bevorzugt mindestens einen Faktor 2.5 größer ist als eine zur Zentralfrequenz gehörenden Rayleigh-Wellenlänge des Ultraschallsignals in der Messkammerwandung,
**dadurch gekennzeichnet, dass**
die Messkammeraußenfläche (11.1) im Bereich der Reflexionsfläche mindestens eine Einkerbung (30) parallel zur Messkammerlängsachse (12) aufweist, wobei Einkerbungsflächen (30.3) nichtparallel zur Reflexionsfläche sind,
wobei die Einkerbungsflächen dazu eingerichtet sind, in die Messkammerwandung eintretenden Ultraschall seitlich wegzureflektieren,
wobei eine Gesamtheit (30.1) der mindestens einen Einkerbung eine Breite (30.2) aufweist, welche zumindest einer Breite der Reflexionsfläche multipliziert mit einem Faktor F1 entspricht, wobei F1 größer als 0,7 und insbesondere größer als 0.8 und bevorzugt größer als 0.9 ist.

2. Ultraschallmessgerät nach Anspruch 1,
wobei das mindestens eine Paar Ultraschallwandler (21, 22) an einer Außenseite der Messkammer angeordnet ist,
wobei die Ultraschallwandler eines Paars dazu eingerichtet sind, Ultraschallsignale mittels Lamb-Wellen oder Plattenwellen im Übergangsbereich zu Rayleigh-Wellen in der Messkammerwandung zu senden und zu empfangen, wobei die Ultraschallwandler dazu eingerichtet sind, die Lamb-Wellen oder Plattenwellen in einem Koppelbereich (16) der Messkammerwandung mittels jeweils mindestens einem Wandlerelement (23) anzuregen und/oder zu erfassen.

3. Ultraschallmessgerät nach Anspruch 1 oder 2,
wobei die Messkammeraußenfläche (11.1) mehrere Einkerbungen (30) aufweist, wobei Einkerbungen insbesondere parallel zueinander verlaufen.

4. Ultraschallmessgerät nach Anspruch 3,
wobei eine erste Gruppe Einkerbungen (31) parallel zueinander verlaufen, und wobei eine zweite Gruppe Einkerbungen (32) parallel zueinander verlaufen, wobei Einkerbungen der ersten Gruppe nichtparallel zu Einkerbungen der zweiten Gruppe sind, wobei eine Ausrichtung der ersten Gruppe einen Winkel von mindestens 20 Grad zu einer Ausrichtung der zweiten Gruppe aufweist.

5. Ultraschallmessgerät nach einem der vorigen Ansprüche,
wobei die mindestens eine Einkerbung (30) bezüglich der Zentralfrequenz zumindest abschnittsweise eine Tiefe von mindestens einer transversalen Wellenlänge eines Ultraschallsignals in der Messrohrwandung (11) aufweist,
und/oder wobei ein Versatz (30.4) zweier benachbarter Einkerbungen kleiner ist als eine Wellenlänge eines Ultraschallsignals in der Messrohrwandung.

6. Ultraschall-Messgerät nach einem der vorigen Ansprüche,
wobei die Messkammerwandung (11) oder eine Messkammeraußenfläche (11.1) der Messkammerwandung zumindest abschnittsweise aus einem Ultraschallsignale absorbierenden Material gefertigt ist.

7. Ultraschall-Messgerät nach Anspruch 6,
wobei die Messkammerwandung eine Kammerstruktur (18) aufweist, wobei die Kammerstruktur mittels Einsatz verschiedener Materialien hergestellt ist, wobei ein erstes Material durch die Messkammerwandung charakterisiert ist und beispielsweise ein Kunststoff oder ein Metall oder eine Keramik ist,
und wobei zumindest ein zweites Material ein Material aus folgender Liste ist:
Gas, insbesondere Luft, Kunststoff, Metall, Gel, Schaum, Aerogel, Vakuum, ein Komposit mit beispielsweise Glashohlkugeln, oder Schwermetall- bzw. Schwermetalloxidpulver.

8. Ultraschall-Messgerät nach einem der vorigen Ansprüche,
wobei die Messkammerwandung im Bereich der Reflexionsfläche eine oberflächlich angeordnete oder in die Messkammerwandung eingebettete dissonante Struktur (17) aufweist,
welche dazu eingerichtet ist, die Entstehung von Rayleigh-Wellen im Bereich der ersten Reflexionsfläche zu behindern.

9. Ultraschall-Messgerät nach Anspruch 8,
wobei die dissonante Struktur (17) in Richtung einer Messkammerlängsachse periodisch oder quasiperiodisch räumlich variierende akustische Impedanzen umfasst.

10. Ultraschall-Messgerät nach Anspruch 9,
wobei die variierenden akustischen Impedanzen mittels Einsatz verschiedener Materialien hergestellt sind, wobei ein erstes Material durch die Messkammerwandung (11) charakterisiert ist und beispielsweise ein Kunststoff oder ein Metall oder eine Keramik ist,
und wobei zumindest ein zweites Material ein Material aus folgender Liste ist:
Gas, insbesondere Luft, Kunststoff, Metall, Gel, Schaum, Aerogel, Vakuum, ein Komposit mit beispielsweise Glashohlkugeln, oder Schwermetall- bzw. Schwermetalloxidpulver.

11. Ultraschall-Messgerät nach einen der vorigen Ansprüche,
wobei das mindestens eine Wandlerelement (23) ein Piezoelement (23.1) aufweist, welches mit der Messkammer mechanisch verbunden ist,
oder wobei der Ultraschallwandler ein Koppelelement (24) mit einer ersten, der Messkammer abgewandten Seite (24.1) und einer zweiten, der Messkammer zugewandten Seite (24.2) aufweist, wobei das mindestens eine Wandlerelement (23), insbesondere ein Piezoelement (23.1) auf der ersten Seite des Koppelelements angeordnet ist, und wobei das Koppelelement mittels der zweiten Seite mit der Messkammer lösbar mechanisch verbunden ist,
oder wobei das Wandlerelement eine Spulenvorrichtung (25.1) umfasst, wobei die Messkammer in den Koppelbereichen ein magnetostriktives oder magnetisch leitfähiges Material (25.2) umfasst oder trägt, wobei die Spulenvorrichtung dazu eingerichtet ist, eine Auslenkung der Messkammerwandung mittels des magnetostriktiven bzw. magnetisch leitfähigen Materials zu erzeugen und/oder zu erfassen,

12. Ultraschall-Messgerät nach Anspruch 11,
wobei das Piezoelement bzw. das Koppelelement bzw. das magnetostriktive Material mit der Messammer (10) mittels einer Klebe-, Löt-, Schweißverbindung oder über eine lösbare Verbindung verbunden ist.

13. Ultraschall-Messgerät nach einem der vorigen Ansprüche,
wobei die Messkammer (10) in ein das Medium beinhaltendes Behältnis über eine Öffnung des Behältnisses mediendicht einsteckbar ist,
oder wobei die Messkammer ein Messrohr (10.1) ist.

14. Ultraschall-Messgerät nach einem der vorigen Ansprüche,
wobei das Ultraschall-Messgerät (1) dazu eingerichtet ist, mindestens eine der folgenden Medieneigenschaften zu messen:
Volumendurchfluss, Massedurchfluss, Dichte, Viskosität, akustische Dämpfung, Schallgeschwindigkeit, Konzentration mindestens eines Medienbestandteils, akustische Dispersion, sowie daraus abgeleiteter Messgrößen.

## Claims

1. An ultrasonic measurement device (1) for detecting a measurement variable of a medium located in a measurement chamber comprising:
The measurement chamber (10) with a measurement chamber wall (11) and a measurement chamber longitudinal axis (12);
at least one pair of ultrasonic transducers (21, 22), which is arranged on a first measurement chamber side (13.1) of the measurement chamber, wherein the ultrasonic transducers of a pair are designed to send ultrasonic signals along an ultrasonic signal path between the ultrasonic transducers of the pair through the volume of the measurement chamber (14) and to receive ultrasonic signals, the ultrasonic signals having a central frequency,
an ultrasonic signal path (19) through the volume of the measurement chamber in each case comprising at least one ultrasonic signal reflection on at least one reflection surface (15.1), a reflection surface being arranged on a measurement chamber inner surface (15) of the measurement chamber wall lying opposite the first measurement chamber side (13.1);
an electronic measurement/operating circuit (77) which is designed to operate the ultrasonic transducers and to evaluate measurement signals generated by means of the ultrasonic transducers and to provide measurement values of measurement variables,
the measurement chamber wall being designed, in the area of the reflection surface opposite first measurement chamber side, at least to hinder a reflection of an ultrasonic signal on a measurement chamber outer surface (11.1) of the measurement chamber wall (11) in the direction of the ultrasonic signal path,
the measurement chamber wall having, in the area of the reflection surface, a maximum wall thickness which is greater by at least a factor of 1.5 and in particular at least a factor of 2 and preferably at least a factor of 2.5 than a Rayleigh wavelength of the ultrasonic signal belonging to the central frequency in the measurement chamber wall,
wherein
the measurement chamber outer surface (11.1) has, in the area of the reflection surface, at least one indentation (30) parallel to the measurement chamber longitudinal axis (12), wherein indentation surfaces (30.3) are non-parallel to the reflection surface,
the indentation surfaces being designed to reflect ultrasound entering the measurement chamber wall laterally away,
an entirety (30.1) of the at least one indentation having a width (30.2) which corresponds at least to a width of the reflection surface multiplied by a factor F1, F1 being greater than 0.7 and in particular greater than 0.8 and preferably greater than 0.9.

2. The ultrasonic measurement device as claimed in claim 1,
the at least one pair of ultrasonic transducers (21, 22) being arranged on an outer side of the measurement chamber,
the ultrasonic transducers of a pair being designed to send and receive ultrasonic signals by means of Lamb waves or plate waves in the transition region to Rayleigh waves in the measurement chamber wall, the ultrasonic transducers being designed to cause and/or detect the Lamb waves or plate waves in a coupling area (16) of the measurement chamber wall by means of in each case at least one transducer element (23).

3. The ultrasonic measurement device as claimed in claim 1 or 2,
the measurement chamber outer surface (11.1) having a plurality of indentations (30), indentations running in particular parallel to one another.

4. The ultrasonic measurement device as claimed in claim 3,
a first group of indentations (31) running parallel to one another, and a second group of indentations (32) running parallel to one another, indentations of the first group being non-parallel to indentations of the second group, an alignment of the first group being at an angle of at least 20 degrees to an alignment of the second group.

5. The ultrasonic measurement device as claimed in one of the preceding claims,
the at least one indentation (30) having at least partially a depth with respect to the central frequency of at least one transverse wavelength of an ultrasonic signal in the measurement tube wall (11),
and/or an offset (30.4) of two neighboring indentations being smaller than a wavelength of an ultrasonic signal in the measurement tube wall.

6. The ultrasonic measurement device as claimed in one of the preceding claims,
the measurement chamber wall (11) or a measurement chamber outer surface (11.1) of the measurement chamber wall being made at least partially from a material absorbing ultrasonic signals.

7. The ultrasonic measurement device as claimed in claim 6,
the measurement chamber wall having a camera structure (18), the camera structure being produced by means of the use of different materials, a first material being **characterized by** the measurement chamber wall and being for example a plastic or a metal or a ceramic,
and at least one second material being a material from the following list:
gas, in particular air, plastic, metal, gel, foam, aerogel, vacuum, a composite with for example hollow glass spheres, or heavy metal powder or heavy metal oxide powder.

8. The ultrasonic measurement device as claimed in one of the preceding claims,
the measurement chamber wall in the area of the reflection surface having a dissonant structure (17) arranged on the surface or embedded in the measurement chamber wall,
which is designed to hinder the formation of Rayleigh waves in the area of the first reflection surface.

9. The ultrasonic measurement device as claimed in claim 8,
the dissonant structure (17) comprising in the direction of a measurement chamber longitudinal axis periodically or quasi-periodically spatially varying acoustic impedances.

10. The ultrasonic measurement device as claimed in claim 9,
the varying acoustic impedances being produced by means of the use of different materials, a first material being **characterized by** the measurement chamber wall (11) and being for example a plastic or a metal or a ceramic,
and at least one second material being a material from the following list:
gas, in particular air, plastic, metal, gel, foam, aerogel, vacuum, a composite with for example hollow glass spheres, or heavy metal powder or heavy metal oxide powder.

11. The ultrasonic measurement device as claimed in one of the preceding claims,
the at least one transducer element (23) having a piezo element (23.1) which is mechanically connected to the measurement chamber,
or the ultrasonic transducer having a coupling element (24) with a first side (24.1) facing away from the measurement chamber and a second side (24.2) facing toward the measurement chamber, the at least one transducer element (23), in particular a piezo element (23.1), being arranged on the first side of the coupling element, and the coupling element being mechanically connected releasably to the measurement chamber by means of the second side,
or the transducer element comprising a coil device (25.1), the measurement chamber comprising or bearing a magnetostrictive or magnetically conductive material (25.2) in the coupling areas, the coil device being designed to generate and/or detect a deflection of the measurement chamber wall by means of the magnetostrictive or magnetically conductive material.

12. The ultrasonic measurement device as claimed in claim 11,
the piezo element or the coupling element or the magnetostrictive material being connected to the measurement chamber (10) by means of an adhesive bond, solder joint, welded joint or via a releasable connection.

13. The ultrasonic measurement device as claimed in one of the preceding claims,
it being possible for the measurement chamber (10) to be plugged into a container containing the medium in a medium-tight manner via an opening of the container,
or the measurement chamber being a measurement tube (10.1).

14. The ultrasonic measurement device as claimed in one of the preceding claims,
the ultrasonic measurement device (1) being designed to measure at least one of the following medium properties:
volume flow, mass flow, density, viscosity, acoustic damping, sound velocity, concentration of at least one medium component, acoustic dispersion, and measurement variables derived therefrom.

## Revendications

1. Appareil de mesure à ultrasons (1) destiné à la mesure d'une grandeur de mesure d'un produit se trouvant dans une chambre de mesure, lequel appareil comprend :
la chambre de mesure (10) avec une paroi de chambre de mesure (11) et un axe longitudinal de chambre de mesure (12) ;
au moins une paire de transducteurs à ultrasons (21, 22), lesquels sont disposés sur un premier côté de chambre de mesure (13.1) de la chambre de mesure, les transducteurs à ultrasons d'une paire étant conçus pour émettre des signaux ultrasonores le long d'un trajet de signal ultrasonore entre les transducteurs à ultrasons de la paire à travers le volume de la chambre de mesure (14) et pour recevoir des signaux ultrasonores, les signaux ultrasonores présentant une fréquence centrale,
un trajet de signal ultrasonore (19) à travers le volume de la chambre de mesure comprenant respectivement au moins une réflexion de signal ultrasonore sur au moins une surface de réflexion (15.1), une surface de réflexion étant disposée sur une surface intérieure de chambre de mesure (15) de la paroi de chambre de mesure opposée au premier côté de chambre de mesure (13.1) ;
un circuit électronique de mesure/d'exploitation (77), lequel est conçu pour exploiter les transducteurs à ultrasons et pour évaluer les signaux de mesure générés au moyen des transducteurs à ultrasons et pour mettre à disposition des valeurs mesurées de grandeurs de mesure,
appareil pour lequel
la paroi de chambre de mesure est conçue, dans la zone de la surface de réflexion opposée au premier côté de chambre de mesure, pour au moins empêcher une réflexion d'un signal ultrasonore sur une surface extérieure (11.1) de la paroi de chambre de mesure (11) dans la direction du trajet de signal ultrasonore,
la paroi de chambre de mesure présentant, dans la zone de la surface de réflexion, une épaisseur de paroi maximale qui est supérieure d'au moins un facteur 1,5 et notamment d'au moins un facteur 2, et de préférence d'au moins un facteur 2,5, à une longueur d'onde de Rayleigh, appartenant à la fréquence centrale, du signal ultrasonore dans la paroi de chambre de mesure,
**caractérisé en ce que**
la surface extérieure de chambre de mesure (11.1) présente, dans la zone de la surface de réflexion, au moins une entaille (30) parallèle à l'axe longitudinal (12) de la chambre de mesure, les surfaces d'entaille (30.3) n'étant pas parallèles à la surface de réflexion,
les surfaces d'entaille étant conçues pour réfléchir latéralement les ultrasons pénétrant dans la paroi de chambre de mesure,
une totalité (30.1) de l'au moins une entaille présentant une largeur (30.2) qui correspond au moins à une largeur de la surface de réflexion multipliée par un facteur F1, F1 étant supérieur à 0,7 et notamment supérieur à 0,8 et de préférence supérieur à 0,9.

2. Appareil de mesure à ultrasons selon la revendication 1,
pour lequel l'au moins une paire de transducteurs à ultrasons (21, 22) est disposée sur un côté extérieur de la chambre de mesure,
les transducteurs à ultrasons d'une paire étant conçus pour émettre et recevoir des signaux ultrasonores au moyen d'ondes de Lamb dans la zone de transition vers des ondes de Rayleigh dans la paroi de chambre de mesure, les transducteurs à ultrasons étant conçus pour exciter et/ou détecter les ondes de Lamb dans une zone de couplage (16) de la paroi de chambre de mesure au moyen respectivement d'au moins un élément transducteur (23).

3. Appareil de mesure à ultrasons selon la revendication 1 ou 2,
pour lequel la surface extérieure de chambre de mesure (11.1) présente plusieurs entailles (30), les entailles étant notamment parallèles entre elles.

4. Appareil de mesure à ultrasons selon la revendication 3,
pour lequel un premier groupe d'entailles (31) s'étend parallèlement les unes aux autres, et
pour lequel un deuxième groupe d'entailles (32) s'étend parallèlement les unes aux autres, les entailles du premier groupe n'étant pas parallèles aux entailles du deuxième groupe, une orientation du premier groupe formant un angle d'au moins 20 degrés par rapport à une orientation du deuxième groupe.

5. Appareil de mesure à ultrasons selon l'une des revendications précédentes,
pour lequel l'au moins une entaille (30) présente, par rapport à la fréquence centrale, au moins par sections, une profondeur d'au moins une longueur d'onde transversale d'un signal ultrasonore dans la paroi du tube de mesure (11),
et/ou pour lequel un décalage (30.4) de deux entailles voisines est inférieur à une longueur d'onde d'un signal ultrasonore dans la paroi de tube de mesure.

6. Appareil de mesure à ultrasons selon l'une des revendications précédentes,
pour lequel la paroi de chambre de mesure (11) ou une surface extérieure de chambre de mesure (11.1) de la paroi de chambre de mesure est fabriquée au moins partiellement dans un matériau absorbant les signaux ultrasonores.

7. Appareil de mesure à ultrasons selon la revendication 6,
pour lequel la paroi de chambre de mesure comprend une structure de chambre (18), la structure de chambre étant fabriquée en utilisant différents matériaux, un premier matériau étant **caractérisé par** la paroi de chambre de mesure et étant par exemple un plastique ou un métal ou une céramique,
et pour lequel au moins un deuxième matériau est un matériau de la liste suivante
gaz, notamment l'air, plastique, métal, gel, mousse, aérogel, vide, un composite avec par exemple des billes de verre creuses, ou poudre de métal lourd ou d'oxyde de métal lourd.

8. Appareil de mesure à ultrasons selon l'une des revendications précédentes,
pour lequel la paroi de chambre de mesure présente, dans la zone de la surface de réflexion, une structure dissonante (17) disposée en surface ou encastrée dans la paroi de chambre de mesure,
laquelle structure est conçue pour entraver la formation d'ondes de Rayleigh dans la zone de la première surface de réflexion.

9. Appareil de mesure à ultrasons selon la revendication 8,
pour lequel la structure dissonante (17) comprend des impédances acoustiques variant spatialement de manière périodique ou quasi périodique dans la direction d'un axe longitudinal de chambre de mesure.

10. Appareil de mesure à ultrasons selon la revendication 9,
pour lequel les impédances acoustiques variables sont produites en utilisant différents matériaux, un premier matériau étant **caractérisé par** la paroi de la chambre de mesure (11) et étant par exemple un plastique ou un métal ou une céramique,
et pour lequel au moins un deuxième matériau est un matériau de la liste suivante
gaz, notamment l'air, plastique, métal, gel, mousse, aérogel, vide, un composite avec par exemple des billes de verre creuses, ou poudre de métal lourd ou d'oxyde de métal lourd.

11. Appareil de mesure à ultrasons selon l'une des revendications précédentes,
pour lequel l'au moins un élément transducteur (23) présente un élément piézoélectrique (23.1), lequel élément piézoélectrique est relié mécaniquement à la chambre de mesure,
ou pour lequel le transducteur à ultrasons présente un élément de couplage (24) avec un premier côté (24.1) opposé à la chambre de mesure et un deuxième côté (24.2) tourné vers la chambre de mesure, l'au moins un élément transducteur (23), notamment un élément piézoélectrique (23.1), étant disposé sur le premier côté de l'élément de couplage, et l'élément de couplage étant relié mécaniquement de manière amovible à la chambre de mesure au moyen du deuxième côté,
ou pour lequel l'élément transducteur comprend un dispositif à bobine (25.1), la chambre de mesure comprenant ou portant dans les zones de couplage un matériau magnétostrictif ou magnétiquement conducteur (25.2), le dispositif à bobine étant conçu pour générer et/ou détecter une déviation de la paroi de chambre de mesure au moyen du matériau magnétostrictif ou magnétiquement conducteur.

12. Appareil de mesure à ultrasons selon la revendication 11,
pour lequel l'élément piézoélectrique ou l'élément de couplage ou le matériau magnétostrictif est relié à la chambre de mesure (10) au moyen d'une liaison par collage, brasage, soudage ou par une liaison amovible.

13. Appareil de mesure à ultrasons selon l'une des revendications précédentes,
pour lequel la chambre de mesure (10) peut être insérée de manière étanche au produit dans un réservoir contenant le produit par une ouverture du réservoir,
ou pour lequel la chambre de mesure est un tube de mesure (10.1).

14. Appareil de mesure à ultrasons selon l'une des revendications précédentes,
lequel appareil de mesure à ultrasons (1) est conçu pour mesurer au moins l'une des propriétés suivantes du produit :
débit volumique, débit massique, densité, viscosité, atténuation acoustique, vitesse du son, concentration d'au moins un composant du produit, dispersion acoustique, ainsi que les grandeurs de mesure qui en découlent.
